# EUROPÄISCHE PATENTSCHRIFT

(11) **EP 0 706 463 B1**
(45) Veröffentlichungstag und Bekanntmachung des Hinweises auf die Patenterteilung: **12.03.1997**
(21) Anmeldenummer: 94918756.1
(22) Anmeldetag: 21.06.1994
(51) Int. Cl.: B60K 6/06, B60K 17/02, F16D 21/08, F16D 13/76

(54) **ANTRIEBSANORDNUNG FÜR EIN HYBRIDFAHRZEUG**
DRIVE ARRANGEMENT FOR A HYBRID VEHICLE
SYSTEME D'ENTRAINEMENT POUR VEHICULE HYBRIDE

(30) Priorität: 09.07.1993 DE 4323602
(43) Veröffentlichungstag der Anmeldung: 17.04.1996
(73) Patentinhaber: FICHTEL & SACHS AG, D-97424 Schweinfurt (DE)
(72) Erfinder: LUTZ, Dieter, D-97422 Schweinfurt (DE); BAUCH-PANETZKY, Dieter, D-97422 Schweinfurt (DE); FELDHAUS, Reinhard, D-97714 Oerlenbach-Ebenhausen (DE); THIELER, Wolfgang, D-97437 Hassfurt (DE)
(74) Vertreter: Meissner, Peter E., Dipl.-Ing.
(86) Internationale Anmeldenummer: DE9400759
(87) Internationale Veröffentlichungsnummer: WO9501885

(56) Entgegenhaltungen:
- EP-A- 0 445 845
- DE-A- 3 737 192
- DE-C- 4 318 949
- FR-A- 2 622 656

## Beschreibung

Die Erfindung betrifft eine Antriebsanordnung für ein Hybridfahrzeug gemäß dem Oberbegriff des Patentanspruchs 1.

Aus der DE-A 37 37 192 ist ein derartiger Hybridantrieb für ein Kraftfahrzeug bekannt, das für seinen Antrieb einen Verbrennungsmotor und einen als Asynchronmaschine ausgebildeten Elektromotor aufweist. Der Rotor des Elektromotors ist über eine erste Trennkupplung (Trockenkupplung) mit der Kurbelwelle des Verbrennungsmotors und über eine zweite Trennkupplung mit der Eingangswelle des Getriebes verbindbar. Der Verbrennungsmotor besitzt kein eigenes Schwungrad. Statt dessen ist der Rotor des Elektromotors als Schwungmasse für den Verbrennungsmotor nutzbar, wenn die erste Kupplung geschlossen ist. Der Rotor des Elektromotors, der innerhalb des Stators angeordnet ist, bestitzt einen Nabenkörper, der an der dem Getriebe zugewandten Seite angeordnet und auf der Getriebeeingangswelle gelagert ist. Er ist sehr massiv ausgeführt und stellt somit einen großen Teil der Schwungmasse dar. Der Nabenkörper bildet das Widerlager für die Kupplungsscheibe der zweiten Trennkupplung, die die Reibschlußverbindung zwischen Rotor und Getriebeeingangswelle herstellt. Die erste Trennkupplung ist auf der dem Verbrennungsmotor zugewandten Stirnseite des Elektromotors angeordnet. Ihre Kupplungsscheibe ist drehfest mit der Kurbelwelle verbunden. Zur Herstellung der Reibschlußverbindung im eingekuppelten Zustand weist sie ein eigenes, ebenfalls massiv ausgeführtes ringförmiges Widerlager auf, das mit dem Rotor starr verbunden ist. Beide Trennkupplungen sind also auf derselben Seite des Nabenkörpers nebeneinander angeordnet. Die Leistung des Elektromotors, der bei rein verbrennungsmotorischem Antrieb des Hybridfahrzeugs (beide Trennkupplungen geschlossen) als Generator arbeitet und die Fahrzeugbatterie und sonstige elektrische Verbraucher speist, beträgt nur einen relativen kleinen Bruchteil der Verbrennungsmotorleistung und liegt z.B. bei 7 kW. Aus diesem Grunde sind die Fahrleistungen im reinen Elektrobetrieb (erste Trennkupplung zwischen Rotor und Kurbelwelle geöffnet, zweite Trennkupplung geschlossen) entsprechend bescheiden. Der Elektromotor soll bei diesem Hybridfahrzeug auch die Funktion des Anlassers für den Verbrennungsmotor übernehmen können. Wegen der geringen Leistung und des relativ niedrigen erzeugbaren Drehmoments ist aber ein direktes Anlassen aus dem Stillstand des Elektromotors heraus nicht immer möglich. Daher ist vorgesehen, daß der Elektromotor zunächst bei geöffneten Trennkupplungen auf eine relativ hohe Drehzahl gebracht wird, so daß in der sich drehenden Schwungmasse des Rotors bereits eine beträchtliche Energiemenge gespeichert ist. Erst dann wird die erste Trennkupplung zwischen Rotor und Kurbelwelle ruckartig eingeschaltet, so daß der Verbrennungsmotor bis über die Anlaßdrehzahl hochgerissen wird und dann selbsttätig weiterlaufen kann. Neben diesen vergleichsweise schlechten Bedingungen für den Start des Verbrennungsmotors weist diese Antriebseinheit eine relativ große axiale Baulänge auf, die für den Einbau in gängige Motor/Getriebe-Einheiten ("Serienteile herkömmlicher Fahrzeuge) hinderlich sein kann.

Aufgabe der Erfindung ist es daher, eine gattungsgemäße Rotriebsanordnung dahingehend weiterzubilden, daß die Leistungsfähigkeit der elektrischen Maschine erhöht und das Starten des Verbrennungsmotors verbessert wird. Dabei ist es vorrangiges Ziel, die axiale Baulänge möglichst klein zu halten.

Gelöst wird diese Aufgabe durch die kennzeichnenden Merkmale des Patentanspruchs 1. Vorteilhafte Ausgestaltungen der Erfindung sind in den Unteransprüchen 2 bis 11 angegeben.

Ausgehend von der bekannten Antriebsanordnung sieht die Erfindung vor, die elektrische Maschine als Außenläufermaschine, vorzugsweise mit permanentmagneterregtem Rotor und elektronisch kommutierter Stromversorgung der Statorwicklungen auszubilden. Dies gewährleistet bedeutend höhere Drehmomente und einen besseren Wirkungsgrad. Darüber hinaus sind die beiden Trockenkupplungen, die zweckmäßig mit einer automatischen Betätigung (z.B. hydraulisch, pneumatisch oder elektromechanisch) versehen sind, einander gegenüberliegend auf verschiedenen Seiten des Nabenteils des Rotors angeordnet. Das Nabenteil liegt also zwischen den beiden Kupplungen und bietet in einer besonders bevorzugten Ausführungsform der Erfindung direkt für beide Kupplungen die Widerlagerfunktion (zweites Funktionsteil) für die Kupplungsscheiben (erstes Funktionsteil), die mit der Kurbelwelle des Verbrennungsmotors bzw. mit der Abtriebswelle (Getriebeeingangswelle) der Antriebsanordnung drehfest verbunden sind. Die zweiten Funktionsteile der beiden Trockenkupplungen sind dabei zweckmäßig einstückig mit dem Nabenteil ausgebildet, insbesondere als dünnwandiger Körper, der im wesentlichen die Form einer Radschüssel aufweist und beispielsweise als vergleichsweise dünnwandiges Blechteil oder Gußteil hergestellt ist. Das Widerlager der beiden Kupplungsscheiben wird bei dieser Lösung in besonders platzsparender Weise von demselben Bauteil gebildet. Die Wanddicke des Nabenteils muß in diesem Bereich lediglich so ausgelegt sein, daß die dem maximalen Drehmoment des Verbrennungsmotors oder (falls höher) des Elektromotors entsprechende Reibenergie beim Kupplungsvorgang aufgenommen und abgeleitet werden kann. In bezug auf die Schwungmasse kann die elektrische Maschine vergleichsweise wesentlich leichter ausgelegt werden, da sie ein bedeutend höheres Drehmoment und eine dementsprechend höhere Leistung erzeugen kann, so daß im Regelfall sogar ein Starten des Verbrennungsmotors aus dem Stillstand des Elektromotors heraus möglich ist, ohne also den Elektromotor zuvor zur Energiespeicherung auf eine hohe Drehzahl zu bringen.

Die Lagerung des Nabenteils des Rotors kann entweder auf der Kurbelwelle oder auf der Getriebeeingangswelle erfolgen. Bevorzugt ist die Lagerung auf der Kurbelwelle. In jedem Fall liegt das Rotorlager zwischen den beiden Trockenkupplungen. Es empfiehlt sich, mindestens eine der Trockenkupplungen mit an sich bekannten Elementen zur Dämpfung vor Torsionsschwingungen zu versehen, um den Fahrkomfort im Verbrennungsmotorbetrieb zu verbessern. In diesem Zusammenhang ist es auch möglich, eine Drehschwingungsdämpfung zu bewirken durch eine entsprechende Variierung der momentanen elektrischen Last, die von einer übergeordneten elektronischen Steuerung im Sinne eines Ausgleichs der Drehschwingungen geregelt wird.

Die Bauweise als Außenläufermaschine mit Permanentmagnetrotor erlaubt die Ausführung des Rotors als ringförmiger Körper mit besonders geringer Dicke (Differenz zwischen Innen- und Außendurchmesser), so daß der Luftspalt zwischen Rotor und Stator bei gleichem Gesamtdurchmesser der Maschine deutlich weiter nach außen verlegt wird und somit höhere Drehmomente erzeugbar sind. Gleichzeitig wirkt die Masse des Magnetrings auf einem großen Durchmesser, so daß sich mit einer vergleichsweise geringen Masse ein beträchtliches Schwungmoment für die Gewährleistung eines guten Rundlaufs des Verbrennungsmotors ergibt. Das Außenläuferprinzip ermöglicht darüber hinaus auch eine in axialer Richtung vergleichsweise kurze Ausführung der elektrischen Maschine. Besonders kompakt ist die Antriebsanordnung, wenn das Blechpaket der Statorwicklungen mit einer groß bemessenen, im wesentlichen zylindrischen Aussparung um die Längsachse der elektrischen Maschine herum (bis in die Nähe der Wicklungen) versehen ist und der Nabenteil des Rotors eine zentrale Auswölbung dergestalt aufweist, daß mindestens eine der beiden Trockenkupplungen innerhalb des von dem Stator umschlossenen Bauraums liegt.

Anstatt einer direkten Lagerung des Rotors auf der Kurbelwelle oder der Getriebeeingangswelle kann auch eine weniger bevorzugte indirekte Lagerung erfolgen. Dies läßt sich z.B. dadurch erreichen, daß die Kupplungsscheibe einer der beiden Trockenkupplungen, vorzugsweise der dem Verbrennungsmotor zugewandten Trockenkupplung drehfest mit dem Nabenkörper des Rotors verbunden wird und das Rotorlager im verbindungsbereich angeordnet wird. Das Rotorlager stützt sich dabei auf dem das Widerlager dieser Kupplung bildenden Bauteil ab, welches über das Kupplungsgehäuse fest mit der Kurbelwelle verbunden ist Im Falle einer indirekten Lagerung auf der Getriebeeingangswelle wäre entsprechend das Kupplungsgehäuse der zweiten Trockenkupplung mit der Getriebeeingangswelle fest verbunden.

Eine weitere Alternative ist in einer Lagerung des Rotors am Stator zu sehen. Dies kann in der Weise ausgeführt sein, daß wiederum die Kupplungsscheibe der ersten Trockenkupplung mit dem Nabenkörper des Rotors verbunden wird und das Rotorlager im Verbindungsbereich angeordnet wird. Es stützt sich auf einem im wesentlichen radschüsselartigen Tragteil ab, das am Stator befestigt ist und von außen in den Zwischenraum zwischen der Kupplungsscheibe der ersten Trockenkupplung und dem Nabenkörper hineinragt. Schließlich könnte in wenig bevorzugter Weise auch eine Lagerung des Rotors über das Gehäuse des Verbrennungsmotors oder des Getriebes erfolgen.

Anhand der in den Figuren 1 - 3 schematisch als Halbschnitt dargestellten Ausführungsbeispiele erfindungsgemäßer Antriebsanordnungen wird die Erfindung nachfolgend näher erläutert. Es zeigen:
- Figur 1: eine Antriebseinheit mit einstückig in den Nabenkörper integrierten zweiten Funktionsteilen der Kupplungen,
- Figur 2: eine Antriebseinheit mit indirekter Lagerung des Nabenkörpers auf der Kurbelwelle und
- Figur 3: eine Antriebseinheit mit Lagerung des Nabenkörpers am Stator.

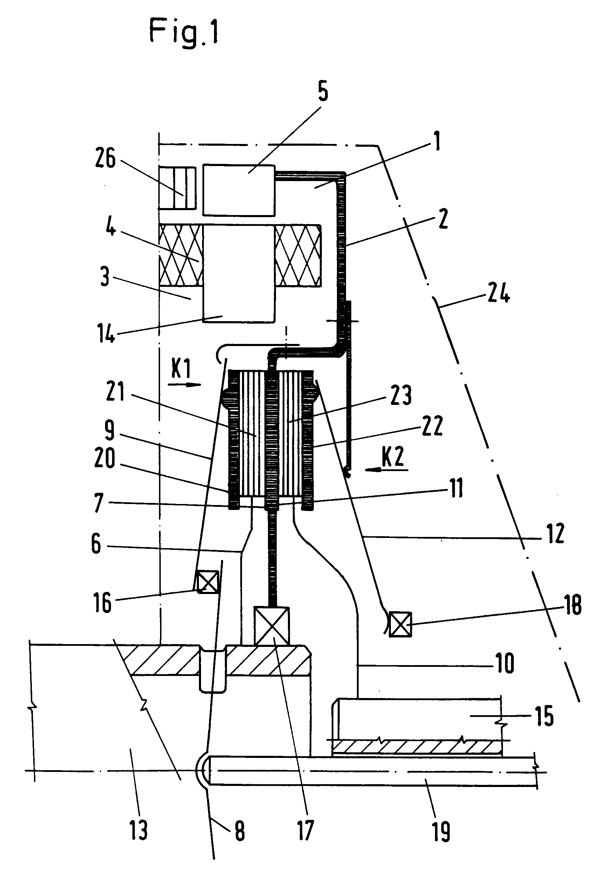

Die aus einer elektrischen Maschine, die sowohl als Elektromotor als auch als Generator betrieben werden kann, und den beiden Trockenkupplungen K1 und K2 bestehende Antriebsanordnung in Fig. 1 ist innerhalb einer Getriebeglocke 24 angeordnet. Die elektrische Maschine ist als permanentmagneterregte Gleichstrommaschine mit elektronischer Kommutierung ausgebildet und besitzt einen Rotor 1 als Außenläufer, der mit einer Vielzahl wechselweise gepolter Permanentmagneten 5 hoher Feldstärke (vorzugsweise aus einer FeNdB- oder einer Smco-Legierung) ausgestattet ist. Um die nicht dargestellte elektronische Steuerung mit den zeitgerechten zur Kommutierung erforderlichen Informationen über die relative Winkelstellung zwischen den Statormagnetpolen und den Permanentmagnetpolen zu versorgen, ist ein mit 26 bezeichnetes Resolversystem vorgesehen. Der Stator 3, dessen Wicklungen mit 4 bezeichnet sind, weist ein Blechpaket 14 auf, das um die Längsachse der elektrischen Maschine herum eine axial durchgehende zylindrische Ausnehmung besitzt, die bis nahe an die Wicklungen 4 heranreicht. Der Stator 3 ist in nicht näher dargestellter Weise mit dem Verbrennungsmotorgehäuse, das ebenfalls nicht dargestellt ist, verbunden. Von dem Verbrennungsmotor ist lediglich das Endstück der Kurbelwelle 13 wiedergegeben. Der Rotor 1 weist an seiner rechten Stirnseite einen radschüsselähnlichen Nabenkörper 2 auf, der zwischen den beiden Trockenkupplungen K1, K2 über Wälzlager 17 drehbar auf der Kurbelwelle 13 gelagert ist. Selbstverständlich könnte der Stator 3 alternativ auch an der Getriebeglocke 24 befestigt sein. In diesem Fall wäre der Nabenkörper 2 auf die linke Stirnseite des Rotors 1 zu verlegen und der Resolver 26 zweckmäßigerweise an der Getriebeglocke 24 zu befestigen. Drehfest mit der Kurbelwelle 13 ist die Kupplungsscheibe 6 der ersten Trockenkupplung K1 verbunden. Die Kupplungsscheibe 6 ist beidseitig mit Reibbelägen 21 ausgestattet. Eine Membranfeder 9 drückt im unbetätigten (eingekuppelten) Zustand über eine Druckplatte 20 die Reibbeläge 21 gegen den als Widerlager 7 fungierenden, also eine entsprechende Reibfläche aufweisenden Nabenkörper 2 des Rotors 1. Der sich dadurch ergebende Reibschluß kann durch Verschieben eines Ausrückstößels 19 nach links wieder aufgehoben werden, da hierdurch ein tellerförmiger Ausrücker 8 über das Ausrücklager 16 der Anpreßkraft der Membranfeder 9 entgegenwirkt. Im unbetätigten Zustand ist über die Trockenkupplung K1 stets eine reibschlüssige Verbindung zwischen Kurbelwelle 13 und Rotor 1 hergestellt. Da der Nabenkörper 2 mit einer nach links weisenden Ausstülpung versehen ist, die in die zylindrische Ausnehmung des Statorblechpakets 14 hineinragt, kann die Kupplung K1 vollständig in den vom Stator 3 umschlossenen Bauraum integriert werden. Auf der gegenüberliegenden axialen Stirnfläche des Nabenkörpers 2 ist die zweite Trockenkupplung K2 angeordnet. Diese weist als erstes Funktionsteil eine beidseitig mit Reibbelägen 23 versehene Kupplungsscheibe 10 auf, die drehfest mit der Abtriebswelle (Getriebeeingswelle) 15 verbunden ist. Das zweite Funktionsteil 11 der Kupplung K2, das das Widerlager für die Reibbeläge 23 der Kupplungsscheibe 10 bildet, ist wiederum körperlich identisch mit dem Nabenkörper 2. Die Reibbeläge 23 werden im unbetätigten Kupplungszustand mittels der Membranfeder 12 über die Druckplatte 22 permanent gegen den Nabenkörper 2 gedrückt und stellen eine Reibschlußverbindung zwischen Rotor 1 und Getriebeeingangswelle 15 her. Durch Verschieben des Ausrücklagers 18 nach links (Betätigungselemente sind nicht näher dargestellt) kann dieser Reibschluß wieder aufgehoben werden.

Zur Dämpfung von Torsionsschwingungen können in an sich bekannter Weise Torsionsdämpfungselemente (nicht dargestellt) vorgesehen werden, die zweckmäßig in die Kupplungsscheibe 10 der zweiten Trockenkupplung K2 integriert werden. Zusätzlich oder alternativ kann auch die Kupplungsscheibe 6 der ersten Kupplung K1 mit solchen Dämpfern versehen werden.

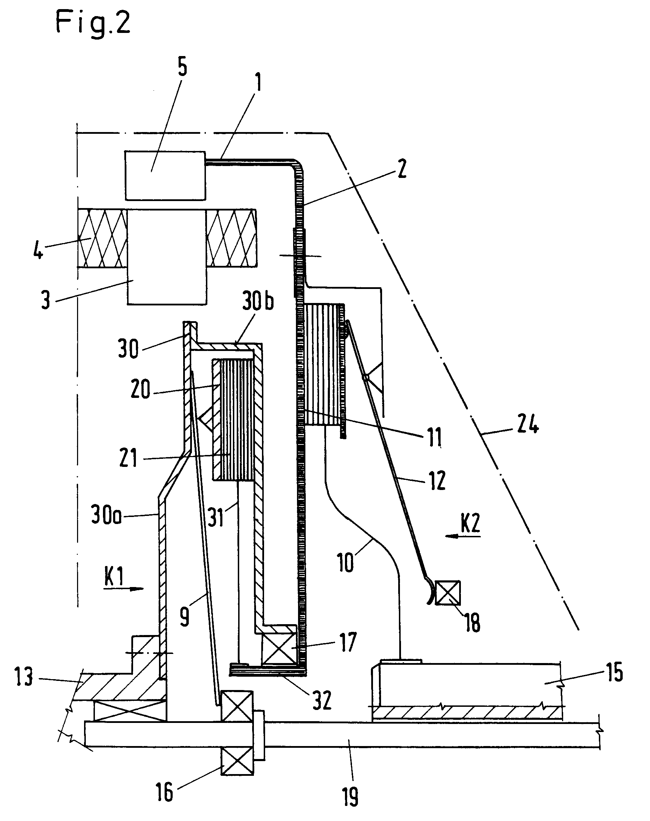

Die Ausführungsform in Fig. 2 stimmt in ihrem elektromotorischen Teil weitestgehend mit demjenigen der Fig. 1 überein, so daß hierauf nicht erneut einzugehen ist. Auch die Ausbildung und Anordnung der Trockenkupplung K2 entspricht der Fig. 2, während sich die Kupplung K1 davon unterscheidet. Das erste Funktionsteil 30 dieser Kupplung K1 ist gebildet aus einem fest mit der Kurbelwelle 13 verbundenen Kupplungsgehäuse 30a und dem damit fest verbundenen Widerlager 30b, das radschüsselartig geformt ist. Die Kupplungsscheibe 31 ist über ein hohlzylinderförmiges Verbindungsstück 32 fest mit dem Nabenkörper 2 des Rotors 1 verbunden. Außen auf diesem Verbindungsstück 32 sitzt das Wälzlager 17 für die Lagerung des Rotors 1. Das Lager 17 stützt sich nach außen hin auf dem zu einem Lagersitz ausgeformten Ende des Widerlagers 30b ab, da dieses von außen in den zwischen der Kupplungsscheibe 31 und dem Nabenkörper 2 gebildeten Zwischenraum hineinragt. Im eingekuppelten Zustand drückt die Membranfeder 9 über die Druckplatte 20 die Kupplungsscheibe 31 mit den Reibbelängen 21 gegen das Widerlager 30b und stellt so den Reibschluß her, so daß eine Drehmomentübertragung von der Kurbelwelle 13 über das Kupplungsgehäuse 30a, die Kupplungsscheibe 31 und das Verbindungsstück 32 auf den Nabenkörper 2 erfolgen kann. Das Ausrücken der Kupplung K1 wird durch Verschiebung des Stößels 10 nach links bewirkt.

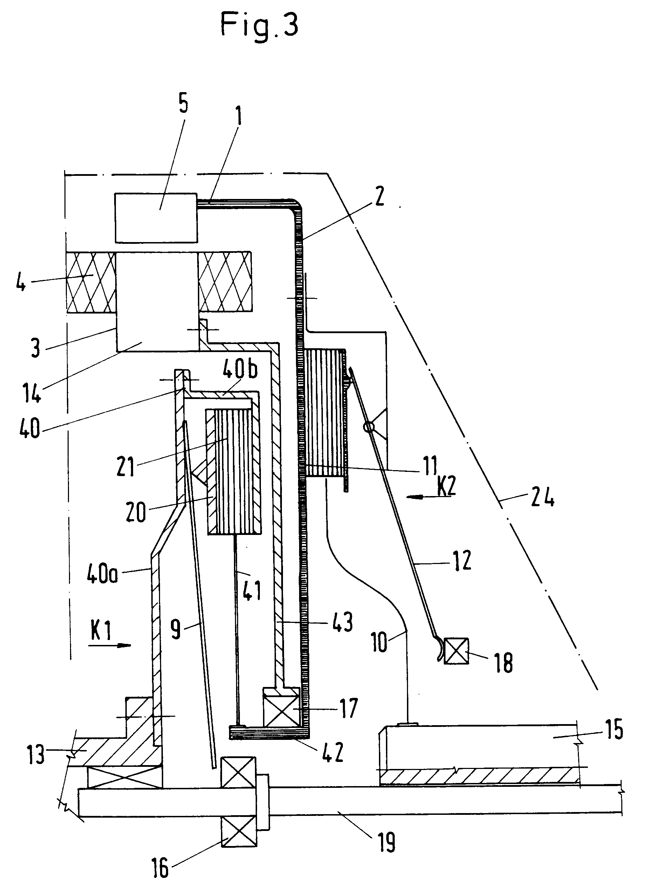

Der Aufbau der Antriebsanordnung in Figur 3 ähnelt dem der Figur 2 in wesentlichen Punkten. Auch hier ist nicht die Kupplungsscheibe (wie in Fig. 1) sondern das Kupplungsgehäuse 40a als Teil des ersten Funktionsteils 40 der Kupplung K1 drehfest mit der Kurbelwelle 13 verbunden. Das Kupplungsgehäuse 40a setzt sich im Widerlager 40b der Kupplung K1 fort. Die Kupplungsscheibe 41 ist wiederum wie bei Fig. 2 über ein hohlzylinderförmiges Verbindungsteil 42 mit dem Nabenkörper 2 des Rotors 1 fest verbunden, und das Rotorlager 17 sitzt auf diesem Verbindungsstück 42. Nach außen hin ist das Lager 17 über ein etwa radschüsselartiges Tragteil 43, das mit dem Stator 3 verbunden ist, abgestützt. Die Reibschlußverbindung wird in gleicher Weise wie in Fig. 2 hergestellt und wieder gelöst. Der Unterschied dieser Ausführungsform der Erfindung gegenüber Fig. 2 besteht also lediglich in der Art der Rotorlagerung.

Es sind auch Ausführungsformen der erfindungsgemäßen Antriebsanordnung möglich, bei denen gegenüber Fig. 1 nicht die Kupplung K1 sondern die Kupplung K2 in entsprechender Weise wie die Kupplung K1 der Figuren 2 und 3 umgeändert wird, d.h. indem die Zuordnung der beiden Funktionsteile der Kupplung K2 zum Radkörper 2 des Rotors 1 bzw. zur Getriebeeingangswelle 19 umgekehrt wird. Generell ist anzumerken, daß die Art der Betätigung der Kupplungen K1 und K2 beliebig ist. Es kann sich um "gedrückte" oder "gezogene" Kupplungen handeln; das Ein- und Auskuppeln kann wie in den Figuren 1 - 3 rein mechanisch, mittels druckmittelbetätigter Kolben/Zylinder-Einheiten oder auch mittels elektromotorischem oder elektromagnetischem Antrieb erfolgen.

Die erfindungsgemäße Antriebsanordnung ist insbesondere in der besonders bevorzugten Ausführungsform gemäß Fig. 1 in der Lage, bei extrem kurzer axialer Baulänge elektrische Antriebsleistungen bei hohem Drehmoment zu erbringen, und weist gemessen an der Leistung ein sehr niedriges Gewicht auf. Sie ermöglicht das Starten des Verbrennungsmotors ohne vorheriges Schwungholen, also ohne vorübergehende Abkopplung des Rotors von der Kurbelwelle. Aufgrund der höheren Leistungsfähigkeit der elektrischen Maschine ist es möglich, im Schubbetrieb des Hybridfahrzeugs ein entsprechend größeres Bremsmoment zu erzeugen und eine effektivere Rückspeisung von Energie in die Fahrzeugbatterie zu erzielen. In diesem Zusammenhang stellt auch der gegenüber Asynchronmaschinen höhere Wirkungsgrad der vorzugsweise eingesetzten permanentmagneterregten Elektromaschine einen wichtigen Vorteil dar. Die Fahrleistungen des Hybridfahrzeugs im reinen Elektrobetrieb sind wesentlich besser als die des eingangs beschriebenen Fahrzeugs.

## Patentansprüche

1. Antriebsanordnung für ein Hybridfahrzeug, mit einer elektrischen Maschine, die einen Rotor (1) mit einem an diesem drehfest angebrachten Nabenkörper (2) und einen Stator (3) aufweist, und mit zwei ein- und ausrückbaren Trockenkupplungen (K1, K2), die jeweils ein erstes Funktionsteil (6, 30, 40 bzw. 10) und ein mit diesem reibschlüssig in Drehmomentübertragungsverbindung bringbares zweites Funktionsteil (7, 31, 41 bzw. 11) aufweisen, wobei das erste Funktionsteil (6, 30, 40) der ersten Trockenkupplung (K1) drehfest mit einer Kurbelwelle (13) eines Verbrennungsmotors des Hybridfahrzeuges und das zweite Funktionsteil der ersten Trockenkupplung (K1) drehfest mit dem Nabenkörper (2) gekoppelt ist, wobei ferner das erste Funktionsteil (10) der zweiten Trockenkupplung (K2) drehfest mit einer zum Antriebsstrang des Hybridfahrzeuges gehörigen Abtriebswelle (15) und das zweite Funktionsteil der zweiten Trockenkupplung (K2) Teil des Nabenkorpers (2) ist, und wobei der Rotor (1) gegenüber der Kurbelwelle (13) und der Abtriebswelle (15) drehbar gelagert ist,
**dadurch gekennzeichnet**,
daß der Rotor (1) der elektrischen Maschine als Außenläufer ausgebildet ist,
daß sich die beiden Trockenkupplungen (K1, K2) aufverschiedenen axialen Stimseiten des Nabenkörpers (2) einander gegenüberliegen,
daß das zweite Funktionsteil der ersten Trockenkupplung (K1) entweder Teil des Nabenkörpers (2) ist
oder durch eine Kupplungsscheibe (31 bzw. 41) gebildet ist, die mit dem Nabenkörper (2) fest verbunden ist, und
daß die Lagerung (17) des Rotors (1) entweder zwischen den beiden Trockenkupplungen (K1, K2) angeordnet oder am Gehäuse des Verbrennungsmotors oder des Getriebes angebracht ist.

2. Antriebsanordnung nach Anspruch 1,
dadurch gekennzeichnet,
daß der Rotor (1) auf der Kurbelwelle (13) oder auf der Abtriebswelle (15) gelagert ist.

3. Antriebsanordnung nach Anspruch 1,
dadurch gekennzeichnet,
daß der Stator (3) fest verbunden ist mit einem radschüsselartigen Tragteil (43), das sich im wesentlichen in einen zwischen dem zweiten Funktionsteil (Kupplungsscheibe 41) der ersten Trockenkupplung (K1) und dem Nabenkörper (2) gebildeten Ringraum erstreckt, und daß das Lager (17) des Rotors (1) zwischen dem Tragteil (43) und einem zylindrischen Verbindungsstück (42) von Kupplungsscheibe (41) und Nabenkörper (2) angeordnet ist.

4. Antriebsanordnung nach Anspruch 1,
dadurch gekennzeichnet,
daß das Lager (17) des Rotors (1) zwischen dem zylindrischen Verbindungsstück (32) der Kupplungsscheibe (31) der ersten Trockenkupplung (K1) und des Nabenkörpers (2) einerseits und dem ersten Funktionsteil (30) der Trockenkupplung (K1) andererseits angeordnet ist, wobei das erste Funktionsteil (30) gebildet ist aus einem mit der Kurbelwelle (13) verbundenen Kupplungsehäuse (30a) und einem radschüsselartig geformten Widerlager (30b).

5. Antriebsanordnung nach Anspruch 2,
dadurch gekennzeichnet,
daß der Nabenkörper (2) und die zweiten Funktionsteile (7, 11) der beiden Trockenkupplungen (K1, K2) einstückig ausgebildet sind.

6. Antriebsanordnung nach einem der Ansprüche 1 bis 5,
dadurch gekennzeichnet,
daß der Nabenkörper (2) als dünnwandiger, im wesentlichen radschüsselförmiger Körper, insbesondere aus Blech, ausgebildet ist.

7. Antriebsanordnung nach einem der Ansprüche 1 bis 6,
dadurch gekennzeichnet,
daß der Stator (3) elektrische Wicklungen (4) und ein Blechpaket (14) mit einer durchgehenden zentralen bis in die Nähe der Wicklungen (4) reichenden zylindrischen Aussparung aufweist und daß der Nabenkörper (2) eine zentrale Auswölbung dergestalt aufweist, daß mindestens eine der beiden Trockenkupplungen (K1, K2) innerhalb des vom Stator (3) umschlossenen Bauvolumens liegt.

8. Antriebsanordnung nach einem der Ansprüche 1 bis 7,
dadurch gekennzeichnet,
daß der Rotor (1) mit einer Vielzahl von Permanentmagneten (5) bestückt ist und daß eine elektronische Kommutierung für die Stromversorgung der Statorwicklungen (4) vorgesehen ist.

9. Antriebsanordnung nach einem der Ansprüche 1 bis 8,
dadurch gekennzeichnet,
daß mindestens eine der Trockenkupplungen (K1, K2) mit Torsionsschwingungsdämpfungselementen ausgestattet ist.

10. Antriebsanordnung nach einem der Ansprüche 1 bis 9,
dadurch gekennzeichnet,
daß die Betätigung der dem Verbrennungsmotor zugewandten ersten Trockenkupplung (K1) durch einen durch die als Hohlwelle ausgebildete Abtriebswelle (15) hindurchgeführten Stößel (19) erfolgt.

11. Antriebsanordnung nach einem der Ansprüche 1 bis 9,
dadurch gekennzeichnet,
daß die Betätigung der dem Verbrennungsmotor zugewandten ersten Trockenkupplung (K1) durch eine druckmittelbeaufschlagte Kolben/Zylinder-Einheit erfolgt.

## Claims

1. Drive unit for a hybrid vehicle, with an electric motor, which comprises a rotor (1) with a hub unit (2) fitted onto and rotating with it and a stator (3), and with two engaging and disengaging dry plate clutches (K1, K2), each of which comprises a first functional component (6, 30, 40 or 10) and a second functional component (7, 31, 41 or 11) that can be brought into frictional contact with the first such that a turning moment is transmitted from one to the other, wherein the first functional component (6, 30, 40) of the first dry plate clutch (K1) is coupled to rotate with a crankshaft (13) of an internal-combustion engine of the hybrid vehicle and the second functional component of the first dry plate clutch (K1) is coupled to rotate with the hub unit (2), such that, further, the first functional component (10) of the second dry plate clutch (K2) rotates together with an output drive-shaft (15) belonging to the transmission train of the hybrid vehicle and the second functional component of the second dry plate clutch (K2) is part of the hub unit (2), and such that the rotor (1) is bearing-mounted so as to rotate with respect to the crankshaft (13) and the output drive-shaft (15),
**characterized in that**
the rotor (1) of the electric motor is designed as an external rotor, the two dry plate clutches (K1, K2) are situated opposite one another on different axial faces of the hub unit (2), the second functional component of the first dry plate clutch (K1) is either part of the hub unit (2) or consists of a coupling disc (31 or 41) attached solidly to the hub unit (2), and the mounting (17) of the rotor (1) is either located between the two dry plate clutches (K1, K2) or attached to the housing of the internal-combustion engine or the transmission system.

2. Drive unit according to Claim 1,
**characterized in that**
the rotor (1) is mounted on the crankshaft (13) or on the output drive-shaft (15).

3. Drive unit according to Claim 1,
**characterized in that**
the stator (3) is solidly attached to a carrier component (43) in the form of a wheel dish, which extends essentially through an annular space between the second functional component (coupling disc 41) of the first dry plate clutch (K1) and the hub unit (2), and in that the bearing (17) of the rotor (1) is located between the carrier component (43) and a cylindrical connection piece (42) joining the coupling disc (41) and the hub unit (2).

4. Drive unit according to Claim 1,
**characterized in that**
the bearing (17) of the rotor is located between the cylindrical connection piece (32) joining the coupling-disc (31) of the first dry plate clutch (K1) and the hub unit (2) on one side and the first functional component (30) of the dry plate clutch (K1) on the other side, such that the first functional component (30) consists of a coupling housing (30a) connected to the crankshaft (13) and an abutment (30b) in the form of a wheel dish.

5. Drive unit according to Claim 2,
**characterized in that**
the hub unit (2) and the second functional components (7, 11) of the two dry plate clutches (K1, K2) are formed in one piece.

6. Drive unit according to any of Claims 1 to 5,
**characterized in that**
the hub unit (2) is formed as a thin-walled body, in particular one made of sheet metal, in the shape of a wheel dish.

7. Drive unit according to any of Claims 1 to 6,
**characterized in that**
the stator (3) comprises electric windings (4) and a Lamination pack (14) with a central cylindrical through-going cut-out which reaches as far as the vicinity of the windings (4), and the hub unit (2) comprises a central convexity such that at least one of the two dry plate clutches (K1, K2) is within the volume enclosed by the stator (3).

8. Drive unit according to any of Claims 1 to 7,
**characterized in that**
the rotor (1) comprises a number of permanent magnets (5) and electric commutation is provided for the supply of current to the stator windings (4).

9. Drive unit according to any of Claims 1 to 8,
**characterized in that**
at least one of the dry plate clutches (K1, K2) is equipped with torsional vibration damping elements.

10. Drive unit according to any of Claims 1 to 9,
**characterized in that**
the first dry plate clutch (K1) facing towards the internal-combustion engine is activated by a push-rod (19) that passes through the output drive-shaft (15), the said shaft being hollow.

11. Drive unit according to any of Claims 1 to 9,
**characterized in that**
the first dry plate clutch (K1) facing towards the internal-combustion engine is activated by a piston/cylinder unit acted upon by a hydraulic fluid.

## Revendications

1. Dispositif d'entraînement pour un véhicule hybride, comportant une machine électrique qui comprend un rotor (1) présentant un corps de moyeu (2) fixé de façon solidaire en rotation à celui-ci et un stator (3), et deux embrayages secs (K1,K2) pouvant être entrés et sortis présentant à chaque fois une première pièce de fonction (6,30,40 ou 10) et une seconde pièce de fonction (7,31,41 ou 11) pouvant être amenée, avec un entraînement par friction, en liaison de transmission de couple de rotation avec celle-ci, la première pièce de fonction (6,30,40) du premier embrayage sec (K1) étant couplée de façon solidaire en rotation à un arbre coudé (13) d'un moteur de combustion du véhicule hybride et la seconde pièce de fonction du premier embrayage sec (K1) étant couplée de façon solidaire en rotation au corps de moyeu (2), la première pièce de fonction (10) du second embrayage sec (K2) étant reliée de façon solidaire en rotation à un arbre mené (15) faisant partie de la voie d'entraînement du véhicule hybride et la seconde pièce de fonction du second embrayage sec (K2) faisant partie du corps de moyeu (2), et le rotor (1) étant monté de façon rotative par rapport à l'arbre coudé (13) et à l'arbre d'entraînement (15),
caractérisé en ce que le rotor (1) de la machine électrique est réalisé sous forme d'un induit externe, en ce que les deux embrayages secs (K1,K2) sont opposés sur des faces frontales axiales différentes du corps de moyeu (2), en ce que la seconde pièce de fonction du premier embrayage sec (K1) fait partie du corps de moyeu (2) ou est formée par un disque d'embrayage (31 ou 41) qui est solidaire du corps de moyeu (2), et en ce que le logement (17) du rotor (1) est agencé entre les deux embrayages secs (K1,K2) ou sur le boîtier du moteur de combustion ou de l'engrenage.

2. Dispositif d'entraînement selon la revendication 1,
caractérisé en ce que le rotor (1) est monté sur l'arbre coudé (13) ou sur l'arbre d'entraînement (15).

3. Dispositif d'entraînement selon la revendication 1,
caractérisé en ce que le stator (3) est solidaire d'une pièce porteuse (43) sous forme d'une coupole, qui s'étend essentiellement dans un espace annulaire formé entre la seconde pièce de fonction (disque d'embrayage 41) du premier embrayage sec (K1) et le corps de moyeu (2), et en ce que le logement (17) du rotor (1) est agencé entre la pièce porteuse (43) et une pièce de liaison cylindrique (42) du disque d'embrayage (41) et du corps de moyeu (2).

4. Dispositif d'entraînement selon la revendication 1,
caractérisé en ce que le logement (17) du rotor (1) est agencé entre la pièce de liaison cylindrique (32) du disque d'embrayage (31) du premier embrayage sec (K1) et du corps de moyeu (2), d'une part, et la première pièce de fonction (30) de l'embrayage sec (K1), d'autre part, la première pièce de fonction (30) étant formée d'un carter d'embrayage (30a) relié à l'arbre coudé (13) et d'une butée (30b) réalisée sous forme d'une coupole.

5. Dispositif d'entraînement selon la revendication 2,
caractérisé en ce que le corps de moyeu (2) et la seconde pièce de fonction (7,11) des deux engrenages secs (K1,K2) sont formés en une seule pièce.

6. Dispositif d'entraînement selon l'une des revendications 1 à 5,
caractérisé en ce que le corps de moyeu (2) est réalisé sous forme d'un corps à parois minces, essentiellement sous forme d'une coupole, en particulier en tôle.

7. Dispositif d'entraînement selon l'une des revendications 1 à 6,
caractérisé en ce que le stator (3 ) présente des enroulements électriques (4) et un empilage de tôles (14) présentant un évidement cylindrique traversant central, s'étendant jusqu'à proximité des enroulements (4), et en ce que le corps de moyeu (2) présente un bombement central de cette forme, en ce qu'au moins l'un des deux engrenages secs (K1,K2) est situé à l'intérieur de l'espace entouré par le stator (3).

8. Dispositif d'entraînement selon l'une des revendications 1 à 7,
caractérisé en ce que le rotor (1) est muni d'une pluralité d'aimants permanents (5) et en ce qu'une commutation électronique pour l'alimentation des enroulements de stator (4) est prévue.

9. Dispositif d'entraînement selon l'une des revendications 1 à 8,
caractérisé en ce qu'au moins l'un des engrenages secs (K1,K2) est équipé d'éléments d'amortissement d'oscillations de torsion.

10. Dispositif d'entraînement selon l'une des revendications 1 à 9,
caractérisé en ce que l'actionnement du premier engrenage sec (K1) associé au moteur de combustion, est réalisé par un coulisseau (19) traversant l'arbre d'entraînement (15) réalisé sous forme d'un arbre creux.

11. Dispositif d'entraînement selon l'une des revendications 1 à 9,
caractérisé en ce que l'actionnement du premier engrenage sec (K1) associé au moteur de combustion, est réalisé par un vérin alimenté en fluide sous pression.
